# EUROPEAN PATENT SPECIFICATION

(11) **EP 3 051 111 B1**
(45) Date of publication and mention of the grant of the patent: **02.05.2018**
(21) Application number: 14865198.7
(22) Date of filing: 18.08.2014
(51) Int. Cl.: F02G 5/04, B63H 21/06, B63H 21/10, B63H 21/14, B63H 21/17, B63H 21/20, B63J 3/02, B63J 3/04, F01D 15/04, F01K 15/02, F01K 23/06, F01K 23/10, F01P 3/20, F02G 5/00, F02G 5/02, F01K 15/04

(54) **WASTE HEAT RECOVERY SYSTEM, SHIP PROPULSION SYSTEM, SHIP, AND WASTE HEAT RECOVERY METHOD**
ABWÄRMERÜCKGEWINNUNGSSYSTEM, SCHIFFSANTRIEBSSYSTEM, SCHIFF UND ABWÄRMERÜCKGEWINNUNGSVERFAHREN
SYSTÈME DE RÉCUPÉRATION DE CHALEUR PERDUE, SYSTÈME DE PROPULSION DE NAVIRE, NAVIRE ET PROCÉDÉ DE RÉCUPÉRATION DE CHALEUR PERDUE

(30) Priority: 27.11.2013 JP 2013245223
(43) Date of publication of application: 03.08.2016
(73) Proprietor: Mitsubishi Heavy Industries, Ltd., Tokyo 108-8215 (JP)
(72) Inventor: KUWAHATA, Kazushi, Tokyo 108-8215 (JP); HIRAOKA, Kazuyoshi, Tokyo 108-8215 (JP)
(74) Representative: Henkel, Breuer & Partner
(86) International application number: PCT/JP2014/071529
(87) International publication number: WO 2015/079748

(56) References cited:
- EP-A1- 2 500 530
- GB-A- 669 945
- JP-A- 2007 223 358
- JP-A- 2010 264 867
- JP-A- 2011 106 302
- JP-A- 2012 037 089
- JP-A- 2012 163 076
- JP-A- 2012 215 124
- JP-A- 2013 227 012

## Description

### Technical Field

The present invention relates to a waste heat recovery system, a ship propulsion system, a ship, and a waste heat recovery method.

### Background Art

As a ship propulsion system of the related art, ship propulsion systems made such that propulsion power by a motor which is driven by electric power of a boiler power generation system provided with a boiler which performs combustion by using exhaust gas of a diesel engine is combined with propulsion power by the diesel engine are known (refer to, for example, JP 4592508B, JP H10-89015A, and JP 2011-148399A).

EP 2500530A1 discloses an engine waste heat recovery power-generating turbo system which recovers, in the form of electricity, waste heat discarded from a reciprocating engine. The engine waste heat recovery power-generating turbo system comprises a jacket cooling water circulatory system, an exhaust passage which exhausts high-temperature combustion gas in the form of exhaust gas, a medium circuit and a power generator. While using a low-boiling medium the medium circuit forms a closed-loop Rankine cycle. The power generator is coaxially coupled to a turbine and generates electricity by being driven to rotate by the turbine which rotates with the expansion of the low-boiling medium. An evaporator unit is provided with an exhaust gas heat exchanger which evaporates the low-boiling medium by at least causing heat exchange between the exhaust gas and the low-boiling medium.

GB 669945A discloses a marine propulsion power plant including ahead and astern steam turbines fed from a steam generator, at least one gas turbine fed with the gases discharged from the steam generator and one or more reciprocating internal combustion engines. The internal combustion engines are used independently or in association with the turbines to provide propulsive power or are used to drive a compressor for supplying combustion air to the steam generator.

### Summary of Invention

### Technical Problem

Incidentally, here, in a steam turbine configuring the boiler power generation system, there is an advantage that less maintenance is required, compared to the diesel engine, and reliability is high, whereas there is a disadvantage that thermal efficiency is low, compared to the diesel engine.

On the other hand, in the diesel engine, there is an advantage that thermal efficiency is high, compared to the steam turbine, whereas there is a disadvantage that a large amount of waste heat is lost to the atmosphere without being completely recovered.

In addition, the waste heat of the diesel engine is used to generate steam by leading exhaust gas discharged from the diesel engine, to an exhaust gas economizer. However, a use destination thereof is limited, and currently, a large amount of waste heat is lost to the atmosphere.

The present invention has been made in order to solve the above problems and has an object to provide a waste heat recovery system, a ship propulsion system, a ship, and a waste heat recovery method, in which it is possible to reduce the amount of waste heat which is lost from an internal combustion engine to the atmosphere and thus improve the efficiency of a ship propulsion system as a whole.

### Solution to Problem

The present invention provides, in order to solve the above problems, a waste heat recovery system including the features of claim 1, a ship propulsion system according to claim 5 with the waste heat recovery system of the invention, a ship according to claim 6 with the ship propulsion system of the invention, and a waste heat recovery method including the features of claim 7.

According to a first aspect of the present invention, there is provided a waste heat recovery system including: an internal combustion engine which is a first driving engine; a steam turbine which is rotationally driven by steam generated in a boiler which is a second driving engine; a first low-pressure feed-water heater which causes heat exchange to be performed between jacket cooling water which has passed through a water jacket of the internal combustion engine and condensed water condensed on the downstream side of the steam turbine, thereby heating the condensed water with heat of the jacket cooling water; a steam generator which generates third steam from second steam generated by exhaust gas discharged from the internal combustion engine in an exhaust gas economizer; and a high-pressure feed-water heater which causes heat exchange to be performed between the third steam generated in the steam generator and the condensed water heated in the first low-pressure feed-water heater, thereby condensing at least a part of the third steam into water.

According to this configuration, in the first low-pressure feed-water heater, the condensed water which is condensed on the downstream side of the steam turbine and led to the boiler is heated by the jacket cooling water which has passed through the water jacket of the internal combustion engine.

That is, the heat of the jacket cooling water is recovered by the condensed water.

In this way, it is possible to reduce the amount of waste heat which is lost from the internal combustion engine to a jacket cooling water cooling medium and thus improve the efficiency of a ship propulsion system as a whole.

Further, it is possible to reduce the amount of heat required to change condensed water to steam, that is, reduce a fuel consumption of the boiler which supplies steam to the steam turbine.

In the above aspect, an exhaust gas economizer of the internal combustion engine may circulate water between the exhaust gas economizer and a steam generator and cause heat exchange to be performed between feed water which is supplied to the exhaust gas economizer and exhaust gas discharged from the internal combustion engine, thereby generating steam. That is, steam required on board a ship is generated by waste heat which is lost to the atmosphere by exhaust gas. In this way, it is possible to reduce a fuel consumption required for generation of steam required on board a ship.

According to this configuration, the feed water which is supplied from the steam generator to the exhaust gas economizer is heated by the exhaust gas discharged from the internal combustion engine. Further, the steam generator is, for example, a boiler which is different from the boiler which supplies steam to the steam turbine, or a steam-water separator which is different from the boiler which supplies steam to the steam turbine.

That is, exhaust gas from an outlet of the exhaust gas economizer has the amount of heat which can sufficiently heat condensed water of a steam turbine propulsion system, and a heater which heats the condensed water of the steam turbine propulsion system is provided on the outlet side of the exhaust gas economizer, whereby it is possible to further reduce the amount of waste heat which is lost from the internal combustion engine and thus improve the efficiency of a ship propulsion system as a whole.

In the above aspects, the waste heat recovery system may further include a high-pressure feed-water heater which causes heat exchange to be performed between the condensed water heated by exhaust gas discharged from the internal combustion engine in a second feed-water heater provided in the exhaust gas economizer and steam generated in a steam generator, thereby heating the condensed water with heat of the steam generated in the steam generator.

In the above configuration, the waste heat recovery system may further include a second low-pressure feed-water heater which causes heat exchange to be performed between the condensed water which is led from the first low-pressure feed-water heater to the exhaust gas economizer and the steam or hot water which has heated the condensed water in the high-pressure feed-water heater, on the downstream side of the high-pressure feed-water heater, thereby heating the condensed water which is led from the first low-pressure feed-water heater to the high-pressure feed-water heater, with heat of the steam or the hot water.

According to this configuration, in the second low-pressure feed-water heater, the condensed water which is led from the first low-pressure feed-water heater to the exhaust gas economizer is heated by the steam or the hot water which has heated the condensed water heated with heat of the exhaust gas.

In this way, it is possible to further reduce the amount of heat required to change condensed water to steam, that is, reduce a fuel consumption of the boiler which supplies steam to the steam turbine.

According to another aspect the ship propulsion system is provided with the waste heat recovery system in which it is possible to reduce the amount of waste heat which is lost from the internal combustion engine to the atmosphere and it is possible to reduce the amount of heat required to change condensed water to steam, that is, reduce a fuel consumption of the boiler which supplies steam to the steam turbine, and therefore, it is possible to improve the efficiency of the ship propulsion system as a whole, and it is possible to reduce a fuel consumption of the entire ship propulsion system.

According to another aspect the ship is provided with the ship propulsion system in which it is possible to improve the efficiency of the ship propulsion system as a whole and it is possible to reduce a fuel consumption of the entire ship propulsion system, and therefore, it is possible to improve the efficiency of the ship as a whole, and it is possible to reduce a fuel consumption of the entire ship.

According to a further aspect of the present invention, there is provided a waste heat recovery method in a waste heat recovery system which includes an internal combustion engine which rotationally drives a propeller shaft and a screw propeller, and a steam turbine which is rotationally driven by steam generated in a boiler, thereby rotationally driving another propeller shaft and screw propeller which are different from the propeller shaft and the screw propeller, the waste heat recovery method including: causing heat exchange to be performed between jacket cooling water which has passed through a water jacket of the internal combustion engine and condensed water which is condensed on the downstream side of the steam turbine and led to an exhaust gas economizer, thereby heating the condensed water with heat of the jacket cooling water.

In the above aspects, in an exhaust gas economizer of the internal combustion engine, water is circulated between the exhaust gas economizer and a steam generator and heat exchange is caused to be performed between feed water which is supplied to the exhaust gas economizer and exhaust gas discharged from the internal combustion engine, thereby generating steam.

According to this configuration, the feed water which is supplied from the steam generator to the exhaust gas economizer is heated by the exhaust gas discharged from the internal combustion engine.

That is, exhaust gas from an outlet of the exhaust gas economizer has the amount of heat which can sufficiently heat condensed water of a steam turbine propulsion system, and a heater which heats the condensed water of the steam turbine propulsion system is provided on the outlet side of the exhaust gas economizer, whereby it is possible to further reduce the amount of waste heat which is lost from the internal combustion engine and thus improve the efficiency of the ship propulsion system as a whole.

### Advantageous Effects of Invention

According to the present invention, the effect of being able to reduce the amount of waste heat which is lost from an internal combustion engine to the atmosphere and thus improve the efficiency of a ship propulsion system as a whole is exhibited.

### Brief Description of Drawings

Fig. 1 is a conceptual diagram of a ship propulsion system to which a waste heat recovery system according to the present invention can be applied.
Fig. 2 is a conceptual diagram of a ship propulsion system to which the waste heat recovery system according to the present invention can be applied.
Fig. 3 is a conceptual diagram of a ship propulsion system to which the waste heat recovery system according to the present invention can be applied.
Fig. 4 is a conceptual diagram of a waste heat recovery system according to a first embodiment of the present invention.
Fig. 5 is a conceptual diagram of a waste heat recovery system according to a second embodiment of the present invention.
Fig. 6 is a conceptual diagram of a waste heat recovery system according to a third embodiment of the present invention.
Fig. 7 is a conceptual diagram of a waste heat recovery system according to a fourth embodiment of the present invention.

### Description of Embodiments

### [First Embodiment]

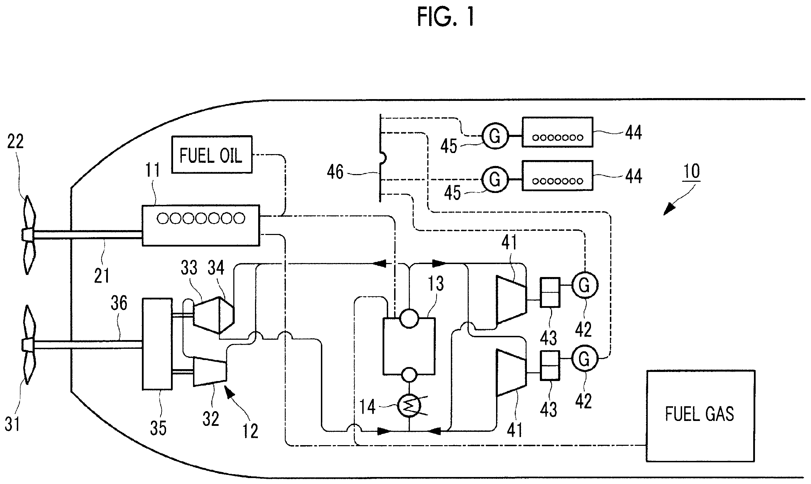

Hereinafter, a waste heat recovery system and a waste heat recovery method according to a first embodiment of the present invention will be described using Figs. 1 to 3.

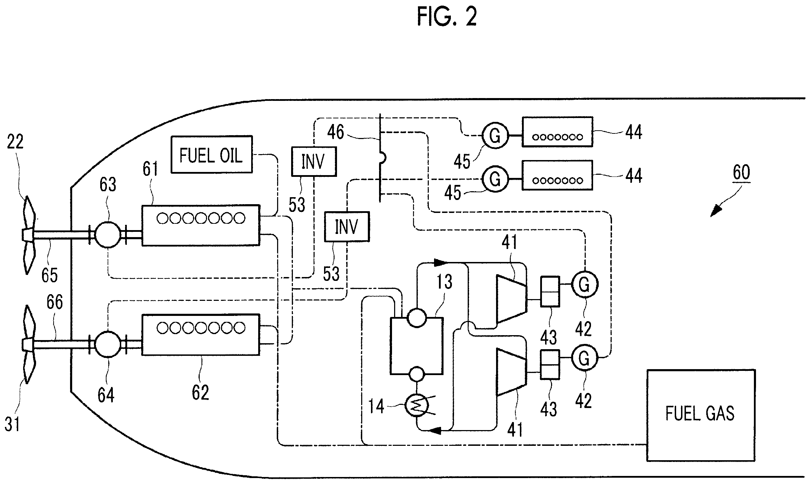

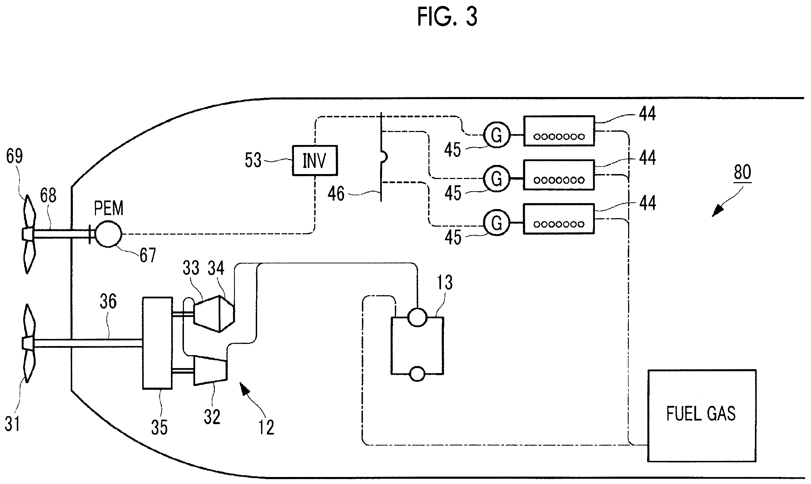

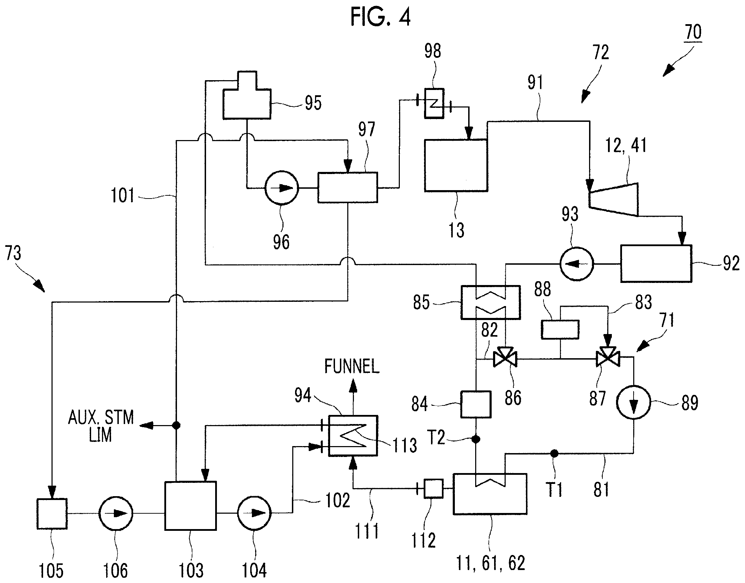

A waste heat recovery system 70 (refer to Fig. 4) according to this embodiment can be applied to, for example, a ship propulsion system 10 shown in Fig. 1, a ship propulsion system 60 shown in Fig. 2, a ship propulsion system 80 shown in Fig. 3, or the like. The ship propulsion system 10 is provided with a diesel engine (for propulsion machinery) 11, a steam turbine (for propulsion machinery) 12, a boiler 13, a steam turbine (for a power generator) 41, a power generator 42, and a speed reducer 43. The ship propulsion system 60 is provided with diesel engines (for propulsion machinery) 61 and 62, shaft generator motors (SGMs) 63 and 64, the boiler 13, the steam turbine (for a power generator) 41, the power generator 42, the speed reducer 43, and an inverter 53. The ship propulsion system 80 is provided with the steam turbine (for propulsion machinery) 12, the boiler 13, a (four-cycle) diesel engine (for a power generator) 44, a power generator 45, the inverter 53, and an electric propulsion motor 67.

As shown in Fig. 1, the diesel engine 11 is a (two-cycle or four-cycle) diesel engine which can burn fuel oil and/or fuel gas (natural gas). A (first) screw propeller 22 is mounted on the diesel engine 11 through a (first) propeller shaft 21. The screw propeller 22 is rotationally driven by the diesel engine 11 and is rotated in the direction of forward movement or the direction of backward movement along with a crankshaft (not shown) configuring the diesel engine 11, and the propeller shaft 21.

The steam turbine 12 is provided with a high-pressure turbine 32 and a low-pressure turbine 33 which rotationally drive a (second) screw propeller 31 in the direction of forward movement, and a reversing turbine 34 which rotates the screw propeller 31 in the direction of backward movement. When rotating the screw propeller 31 in the direction of forward movement, steam generated in the boiler 13 reaches a main condenser 14 through the high-pressure turbine 32 and the low-pressure turbine 33, and when rotating the screw propeller 31 in the direction of backward movement, steam generated in the boiler 13 reaches the main condenser 14 through the reversing turbine 34.

Here, the steam turbine 12 may be a reheat plant equipped with a medium-pressure turbine (not shown) and a reheat boiler (not shown).

In addition, reference numerals 35 and 36 in Fig. 1 respectively denote a speed reducer and a (second) propeller shaft which transmit the rotation of the steam turbine 12 to the screw propeller 31.

Further, reference numerals 41, 42, and 43 in Fig. 1 respectively denote a steam turbine (for a power generator) which is rotationally driven by steam generated in the boiler 13, a power generator which generates electricity required on board a ship, and a speed reducer which transmits the rotation of the steam turbine 41 to the power generator 42.

Further, reference numerals 44, 45, and 46 in Fig. 1 respectively denote a (four-cycle) diesel engine (for a power generator) which can burn fuel oil and/or fuel gas, a power generator which is rotationally driven by the diesel engine 44, thereby generating electricity required on board a ship, and a bus which receives a total current generated in the power generators 42 and 45 and distributes the current to each outside line through a switch (not shown).

The boiler 13 is a boiler which can burn fuel oil and/or fuel gas (natural gas).

In addition, burning fuel oil in the boiler 13 is not a regulation target of NOx emission from an engine in itself. Therefore, even in an ocean area which is subjected to the regulation of NOx emission from an engine, it is possible to perform sailing by using energy obtained by burning fuel oil in the boiler 13 for the rotational drive of the propeller shaft 36 and the screw propeller 31.

The shaft generator motors 63 and 64 shown in Fig. 2 are devices having a function as a power generator which generates electricity by the rotation of propeller shafts 65 and 66, and a function as an electric motor (an assistance motor) which rotationally drives the propeller shafts 65 and 66 by a current sent from the bus 46 through the inverter 53.

In addition, in the ship propulsion system 60 shown in Fig. 2, the screw propeller 22 is mounted on a tip portion of the (first) propeller shaft 65, and the screw propeller 31 is mounted on a tip portion of the (second) propeller shaft 66.

The electric propulsion motor 67 shown in Fig. 3 is rotationally driven by electricity generated in the power generator 45, thereby rotating a propeller shaft 68 and a screw propeller 69.

In addition, in the ship propulsion system 80 shown in Fig. 3, the screw propeller 31 is mounted on a tip portion of the (first) propeller shaft 36, and the screw propeller 69 is mounted on a tip portion of the (second) propeller shaft 68.

Reference numerals 44, 45, and 46 in Fig. 3 respectively denote a (four-cycle) diesel engine (for a power generator) which can burn fuel oil and/or fuel gas, a power generator which is rotationally driven by the diesel engine 44, thereby generating electricity required for the electric propulsion motor 67, and a bus which receives a total current generated in the power generators 42 and 45 and distributes the current to each outside line through a switch (not shown).

Incidentally, as shown in Fig. 4, the waste heat recovery system 70 according to this embodiment is provided with a jacket cooling water circulation flow path 71, a first waste heat recovery flow path 72, and a second waste heat recovery flow path 73.

The jacket cooling water circulation flow path 71 is provided with a main flow path 81, a first bypass flow path 82, a second bypass flow path 83, a desalination device 84, a first low-pressure feed-water heater 85, a first three-way valve 86, a second three-way valve 87, a cooler 88, and a jacket cooling water circulation pump 89.

In addition, a symbol T1 in Fig. 4 denotes a temperature sensor which measures an inlet temperature of jacket cooling water which flows into the diesel engine 11 or the diesel engines 61 and 62, and a symbol T2 denotes a temperature sensor which measures an outlet temperature of the jacket cooling water which flows out from the diesel engine 11 or the diesel engines 61 and 62.

In the middle of the main flow path 81, the desalination device 84, the first low-pressure feed-water heater 85, the first three-way valve 86, the second three-way valve 87, and the jacket cooling water circulation pump 89 are connected in order from the upstream side (the diesel engine 11 side or the sides of the diesel engines 61 and 62).

The first bypass flow path 82 is a pipe which connects the middle of the main flow path 81, which connects the desalination device 84 and the first low-pressure feed-water heater 85, and the first three-way valve 86.

The second bypass flow path 83 is a pipe which connects the middle of the main flow path 81, which connects the first three-way valve 86 and the second three-way valve 87, and the second three-way valve 87, and in the middle thereof, the cooler 88 is connected.

Here, each of the first three-way valve 86 and the second three-way valve 87 is made so as to be automatically opened and closed (such that an opening degree thereof is adjusted) by a controller (not shown) such that the temperature measured in the temperature sensor T1 becomes constant at a predetermined temperature (for example, 60°C) or the temperature measured in the temperature sensor T2 becomes constant at a predetermined temperature (for example, 85°C).

Further, the second three-way valve 87 is switched so as to flow through the second bypass flow path 83 in a case where waste heat is not fully recovered in the desalination device 84 and the first low-pressure feed-water heater 85 and the temperature measured in the temperature sensor T1 and/or the temperature measured in the temperature sensor T2 exceeds a predetermined temperature, and waste heat which has not been fully recovered in the desalination device 84 and the first low-pressure feed-water heater 85 is lost to seawater in the cooler 88.

The first waste heat recovery flow path 72 is provided with a main flow path 91, the steam turbine 12 or the steam turbine 41, a condenser 92, a condensed water pump 93, the first low-pressure feed-water heater 85, a deaerator 95, a feed-water pump 96, a high-pressure feed-water heater 97, an economizer 98, and the boiler 13.

In the middle of the main flow path 91, the steam turbine 12 or the steam turbine 41, the condenser 92, the condensed water pump 93, the low-pressure feed-water heater 85, the deaerator 95, the feed-water pump 96, the high-pressure feed-water heater 97, the economizer 98, and the boiler 13 are connected in order.

The second waste heat recovery flow path 73 is provided with a main flow path 101, a sub-flow path 102, a steam generator 103, a feed-water pump 104, an exhaust gas economizer 94, the high-pressure feed-water heater 97, a drain tank 105, and a drain pump 106.

In the middle of the sub-flow path 102, the steam generator 103, the feed-water pump 104, and the exhaust gas economizer 94 are connected in order, and feed water which is supplied from the steam generator 103 to the exhaust gas economizer 94 by the feed-water pump 104 is heated, thereby generating (second) steam. That is, the heat of exhaust gas is recovered by the feed water.

The steam generator 103 has a function of performing steam-water separation of the (second) steam, thereby supplying a (third) steam component to the main flow path 101, and being able to perform auxiliary combustion as a boiler in a case where the amount of heat of (third) steam is insufficient.

In the middle of the main flow path 101, the steam generator 103, the high-pressure feed-water heater 97, the drain tank 105, and the drain pump 106 are connected in order.

Here, in the high-pressure feed-water heater 97, at least a part of the (third) steam supplied from the steam generator 103 is condensed into water, and the condensed moisture is recovered to the drain tank 105 and supplied to the steam generator 103 by the drain pump 106.

At least a part of the (third) steam supplied from the steam generator 103 is condensed into water in the high-pressure feed-water heater 97, whereby the amount of heat of the (third) steam is recovered to condensed water which is supplied to the boiler 13 to latent heat.

The exhaust gas discharged from the diesel engine 11 or the diesel engines 61 and 62 is discharged overboard from a funnel through an exhaust pipe 111.

In the middle of the exhaust pipe 111, a turbocharger 112 and the exhaust gas economizer 94 are connected in order from the upstream side (the diesel engine 11 side or the sides of the diesel engines 61 and 62).

According to the waste heat recovery system 70 and the waste heat recovery method according to this embodiment, in the first low-pressure feed-water heater 85, condensed water which is condensed in the condenser 92 on the downstream side of the steam turbine 12 or 41 and led to the high-pressure feed-water heater 97 is heated by jacket cooling water which has passed through a water jacket of the diesel engine 11, 61, or 62.

That is, the heat of the jacket cooling water is recovered by the condensed water.

In this way, it is possible to reduce the amount of waste heat which is lost from the diesel engine 11, 61, or 62 and thus improve the efficiency of the ship propulsion system 10 or 60 as a whole.

Further, it is possible to reduce the amount of heat required to change condensed water to steam, that is, reduce the fuel consumption of the boiler 13 which supplies steam to the steam turbine 12 or 41.

Further, according to the waste heat recovery system 70 and the waste heat recovery method according to this embodiment, in a first feed-water heater 113, feed water which is supplied from the steam generator 103 to the exhaust gas economizer 94 is heated by exhaust gas discharged from the diesel engine 11, 61, or 62.

That is, the heat of the exhaust gas is recovered by the feed water.

In this way, it is possible to reduce the amount of waste heat which is lost from the diesel engine 11, 61, or 62 to the atmosphere and thus improve the efficiency of the ship propulsion system as a whole.

Further, it is possible to reduce the amount of heat required to change feed water to steam, that is, reduce the fuel consumption of the steam generator 103.

According to the ship propulsion system 10 or 60 according to the present invention, the ship propulsion system 10 or 60 is provided with the waste heat recovery system 70 in which it is possible to reduce the amount of waste heat which is lost from the diesel engine 11, 61, or 62 to the atmosphere and it is possible to reduce the amount of heat required to change condensed water to steam, that is, reduce the fuel consumption of the boiler 13 which supplies steam to the steam turbine 12 or 41, and therefore, it is possible to improve the efficiency of the ship propulsion system 10 or 60 as a whole and it is possible to reduce the fuel consumption of the entire ship propulsion system 10 or 60.

According to a ship according to the present invention, the ship is provided with the ship propulsion system 10 or 60 in which it is possible to improve the efficiency of the ship propulsion system 10 or 60 as a whole and it is possible to reduce the fuel consumption of the entire ship propulsion system 10 or 60, and therefore, it is possible to improve the efficiency of the ship as a whole and it is possible to reduce the fuel consumption of the entire ship.

### [Second Embodiment]

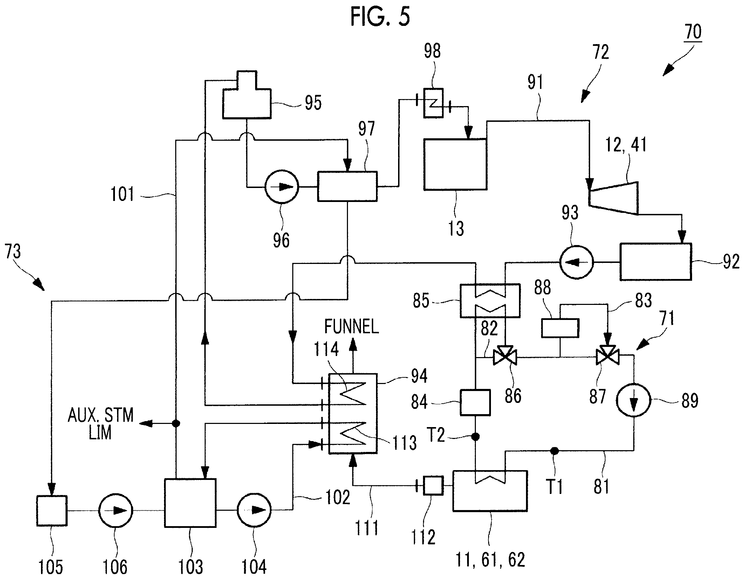

A waste heat recovery system according to a second embodiment of the present invention will be described with reference to Fig. 5. The waste heat recovery system 70 according to this embodiment is different from that of the above-described first embodiment in that the waste heat recovery system 70 according to this embodiment is further provided with a second feed-water heater 114.

In addition, the same members as those of the first embodiment described above are denoted by the same reference numerals and description of these constituent elements is omitted here.

As shown in Fig. 5, the exhaust gas economizer 94 is further provided with the second feed-water heater 114.

The first waste heat recovery flow path 72 is provided with the main flow path 91, the steam turbine 12 or the steam turbine 41, the condenser 92, the condensed water pump 93, the first low-pressure feed-water heater 85, the second feed-water heater 114, the deaerator 95, the feed-water pump 96, the high-pressure feed-water heater 97, the economizer 98, and the boiler 13.

In the middle of the main flow path 91, the steam turbine 12 or the steam turbine 41, the condenser 92, the condensed water pump 93, the low-pressure feed-water heater 85, the second feed-water heater 114, the deaerator 95, the feed-water pump 96, the high-pressure feed-water heater 97, the economizer 98, and the boiler 13 are connected in order.

According to the waste heat recovery system 70 and a waste heat recovery method according to this embodiment, the high-pressure feed-water heater 97 causes heat exchange to be performed between condensed water heated by the exhaust gas discharged from the diesel engine 11 in the second feed-water heater 114 and the steam generated in the steam generator 103, thereby heating the condensed water with the heat of the steam generated in the steam generator 103. The condensed water which is heated in the second feed-water heater 114 is condensed water which has been condensed in the condenser 92 on the downstream side of the steam turbine 12 or 41 and then heated by the jacket cooling water which has passed through the water jacket of the diesel engine 11, 61, or 62, in the first low-pressure feed-water heater 85.

### [Third Embodiment]

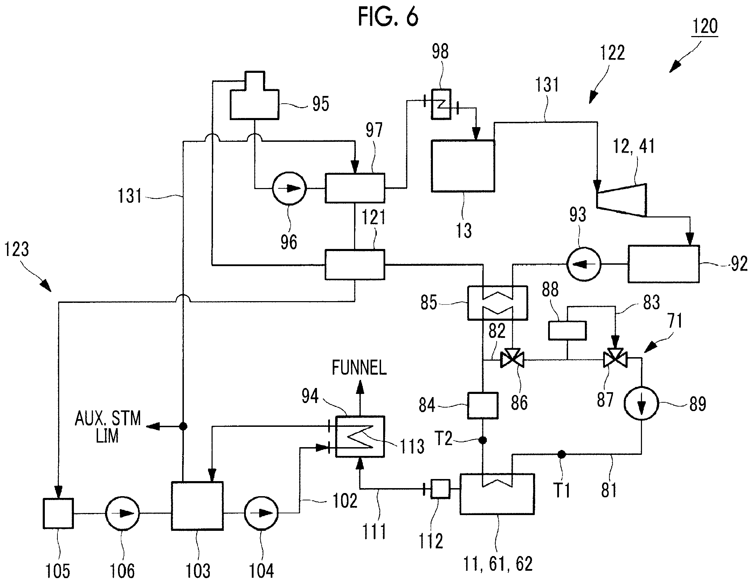

A waste heat recovery system according to a third embodiment of the present invention will be described with reference to Fig. 6. A waste heat recovery system 120 according to this embodiment is different from that of the above-described first embodiment in that the waste heat recovery system 120 according to this embodiment is further provided with a second low-pressure feed-water heater 121.

In addition, the same members as those of the first embodiment described above are denoted by the same reference numerals and description of these constituent elements is omitted here.

As shown in Fig. 6, the waste heat recovery system 120 according to this embodiment is provided with the jacket cooling water circulation flow path 71, a first waste heat recovery flow path 122, and a second waste heat recovery flow path 123.

The first waste heat recovery flow path 122 is provided with a main flow path 131, the steam turbine 12 or the steam turbine 41, the condenser 92, the condensed water pump 93, the first low-pressure feed-water heater 85, the second low-pressure feed-water heater 121, the exhaust gas economizer 94, the deaerator 95, the feed-water pump 96, the high-pressure feed-water heater 97, the economizer 98, and the boiler 13.

In the middle of the main flow path 131, the steam turbine 12 or the steam turbine 41, the condenser 92, the condensed water pump 93, the first low-pressure feed-water heater 85, the second low-pressure feed-water heater 121, the exhaust gas economizer 94, the deaerator 95, the feed-water pump 96, the high-pressure feed-water heater 97, the economizer 98, and the boiler 13 are connected in order.

The second waste heat recovery flow path 123 is provided with the main flow path 131, the sub-flow path 102, the steam generator 103, the feed-water pump 104, the exhaust gas economizer 94, the high-pressure feed-water heater 97, the second low-pressure feed-water heater 121, the drain tank 105, and the drain pump 106.

In the middle of the main-flow path 131, the steam generator 103, the high-pressure feed-water heater 97, the second low-pressure feed-water heater 121, the drain tank 105, and the drain pump 106 are connected in order.

According to the waste heat recovery system 120 and a waste heat recovery method according to this embodiment, in the first low-pressure feed-water heater 85, condensed water which is condensed on the downstream side of the steam turbine 12 or 41 and led to the exhaust gas economizer 94 is heated by the jacket cooling water which has passed through the water jacket of the diesel engine 11, 61, or 62.

That is, the heat of the jacket cooling water is recovered by the condensed water.

In this way, it is possible to reduce the amount of waste heat which is lost from the diesel engine 11, 61, or 62 to the atmosphere and thus improve the efficiency of the ship propulsion system 10 or 60 as a whole.

Further, it is possible to reduce the amount of heat required to change condensed water to steam, that is, reduce the fuel consumption of the boiler 13 which supplies steam to the steam turbine 12 or 41.

### [Fourth Embodiment]

Next, a waste heat recovery system according to a fourth embodiment of the present invention will be described. The waste heat recovery system 120 according to this embodiment has a configuration in which the waste heat recovery system 120 according to this embodiment is further provided with the second feed-water heater 114 and the second low-pressure feed-water heater 121 and the second embodiment and the third embodiment are combined.

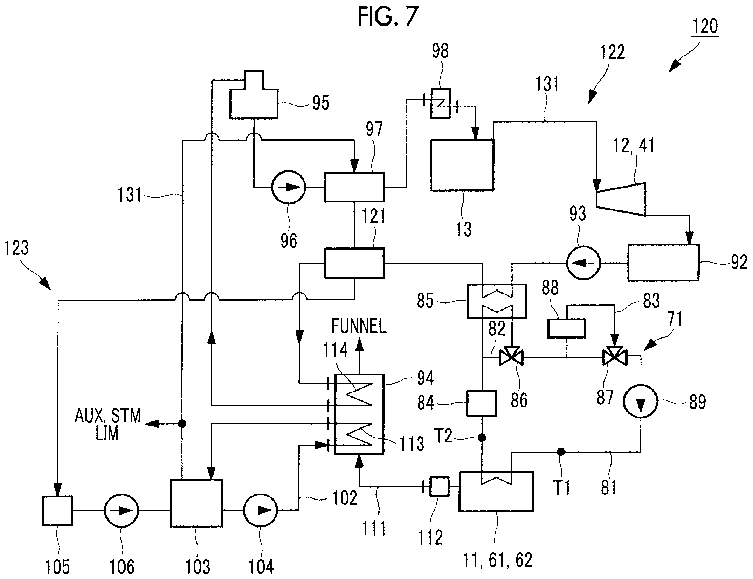

In addition, in Fig. 7, the same members as those of the first to third embodiments described above are denoted by the same reference numerals and description of these constituent elements is omitted here.

Further, according to the waste heat recovery system 120 and a waste heat recovery method according to this embodiment, in the first feed-water heater 113, feed water which is supplied from the steam generator 103 to the exhaust gas economizer 94 is heated by the exhaust gas discharged from the diesel engine 11, 61, or 62.

That is, the heat of the exhaust gas is recovered by the feed water.

In this way, it is possible to reduce the amount of waste heat which is lost from the diesel engine 11, 61, or 62 to the atmosphere and thus improve the efficiency of the ship propulsion system as a whole.

Further, it is possible to reduce the amount of heat required to change feed water to steam, that is, reduce the fuel consumption of the steam generator 103.

Further, according to the waste heat recovery system 120 and the waste heat recovery method according to this embodiment, in the second low-pressure feed-water heater 121, condensed water which is led from the first low-pressure feed-water heater 85 to the exhaust gas economizer 94 is heated by steam or hot water which has flowed from the main flow path 131 which has performed heating of condensed water heated with the heat of exhaust gas in the high-pressure feed-water heater 97.

In this way, it is possible to further reduce the amount of heat required to change condensed water to steam, that is, reduce the fuel consumption of the boiler 13 which supplies steam to the steam turbine 12 or 41.

According to the ship propulsion system 10 or 60 according to the present invention, the ship propulsion system 10 or 60 is provided with the waste heat recovery system 70 in which it is possible to reduce the amount of waste heat which is lost from the diesel engine 11, 61, or 62 to the atmosphere and it is possible to reduce the amount of heat required to change condensed water to steam, that is, reduce the fuel consumption of the boiler 13 which supplies steam to the steam turbine 12 or 41, and therefore, it is possible to improve the efficiency of the ship propulsion system 10 or 60 as a whole and it is possible to reduce the fuel consumption of the entire ship propulsion system 10 or 60.

According to a ship according to the present invention, the ship is provided with the ship propulsion system 10 or 60 in which it is possible to improve the efficiency of the ship propulsion system 10 or 60 as a whole and it is possible to reduce the fuel consumption of the entire ship propulsion system 10 or 60, and therefore, it is possible to improve the efficiency of the ship as a whole and it is possible to reduce the fuel consumption of the entire ship.

In addition, the present invention is not limited to the embodiments described above and can also be implemented to be appropriately modified or changed, as necessary.

For example, in the embodiments described above, a two-engine and two-shaft ship has been described by being taken as a specific example. However, the present invention is not limited thereto and can also be applied to a three-engine and three-shaft ship and a four-engine and four-shaft ship.

Further, in the first and second embodiments described above, the (two-cycle or four-cycle) diesel engine which can burn fuel oil and/or fuel gas (natural gas) has been described by being taken as a specific example of an internal combustion engine. However, the present invention is not limited thereto, and if it is an internal combustion engine having a water jacket, any type of internal combustion engine is also acceptable.

### Reference Signs List

- 10:: ship propulsion system
- 11:: diesel engine (internal combustion engine)
- 12:: steam turbine
- 13:: boiler
- 21:: propeller shaft
- 22:: screw propeller
- 31:: screw propeller
- 36:: propeller shaft
- 41:: steam turbine
- 42:: power generator
- 60:: ship propulsion system
- 61:: diesel engine (internal combustion engine)
- 62:: diesel engine (internal combustion engine)
- 63:: shaft generator motor
- 64:: shaft generator motor
- 65:: propeller shaft
- 66:: propeller shaft
- 70:: waste heat recovery system
- 85:: first low-pressure feed-water heater
- 94:: exhaust gas economizer
- 97:: high-pressure feed-water heater
- 103:: steam generator
- 113:: first feed-water heater
- 114:: second feed-water heater
- 120:: waste heat recovery system
- 121:: second low-pressure feed-water heater

## Claims

1. A waste heat recovery system (70;120) comprising:
an internal combustion engine (11) which is a first driving engine and which is arranged to rotationally drive a first propeller shaft (21) and screw propeller (22);
a steam turbine (12) which is a second driving engine and which is arranged to be rotationally driven by steam generated in a boiler (13) to thereby rotationally drive a second propeller shaft (36) and screw propeller (31) which are different from the first propeller shaft (21) and screw propeller (22);
a first low-pressure feed-water heater (85) which is arranged to cause heat exchange to be performed between jacket cooling water which has passed through a water jacket of the internal combustion engine (11) and condensed water condensed on the downstream side of the steam turbine (12), thereby heating the condensed water with heat of the jacket cooling water;
a steam generator (103) which is arranged to generate third steam from second steam generated by exhaust gas discharged from the internal combustion engine (11) in an exhaust gas economizer (94); and
a high-pressure feed-water heater (97) which is arranged to cause heat exchange to be performed between the third steam generated in the steam generator (103) and the condensed water heated in the first low-pressure feed-water heater (85), thereby condensing at least a part of the third steam into water.

2. The waste heat recovery system (70;120) according to Claim 1, wherein the exhaust gas economizer (94) of the internal combustion engine (11) is arranged to circulate water between the exhaust gas economizer (94) and the steam generator (103) and cause heat exchange to be performed between feed water which is supplied to the exhaust gas economizer (94) and exhaust gas discharged from the internal combustion engine (11), thereby generating steam.

3. The waste heat recovery system (120) according to Claim 1 or 2, further wherein:
the high-pressure feed-water heater (97) is arranged to cause heat exchange to be performed between the condensed water heated by exhaust gas discharged from the internal combustion engine (11) in a second feed-water heater (114) provided in the exhaust gas economizer (94) and steam generated in the steam generator (103), thereby heating the condensed water with heat of the steam generated in the steam generator (103).

4. The waste heat recovery system (120) according to any one of Claims 1 to 3, further comprising:
a second low-pressure feed-water heater (121) which is arranged to cause heat exchange to be performed between the condensed water which is led from the first low-pressure feed-water heater (85) to the high-pressure feed-water heater (97) and the steam or hot water which has heated the condensed water in the high-pressure feed-water heater (97), on the downstream side of the high-pressure feed-water heater (97), thereby heating the condensed water which is led from the first low-pressure feed-water heater (85) to the exhaust gas economizer (94), with heat of the steam or the hot water.

5. A ship propulsion system comprising:
the waste heat recovery system (70;120) according to any one of Claims 1 to 4.

6. A ship comprising:
the ship propulsion system according to Claim 5.

7. A waste heat recovery method in a waste heat recovery system which includes
an internal combustion engine (11) which rotationally drives a first propeller shaft (21) and screw propeller (22), and
a steam turbine (12) which is rotationally driven by steam generated in a boiler (13), thereby rotationally driving a second propeller shaft (36) and screw propeller (31) which are different from the first propeller shaft (21) and screw propeller (22),
the waste heat recovery method comprising:
causing heat exchange to be performed between jacket cooling water which has passed through a water jacket of the internal combustion engine (11) and condensed water which is condensed on the downstream side of the steam turbine (12) and led to an exhaust gas economizer (94), thereby heating the condensed water with heat of the jacket cooling water.

8. The waste heat recovery method according to Claim 7, wherein in the exhaust gas economizer (94) of the internal combustion engine (11), water is circulated between the exhaust gas economizer (94) and a steam generator (103) and heat exchange is caused to be performed between feed water which is supplied to the exhaust gas economizer (94) and exhaust gas discharged from the internal combustion engine (11), thereby generating steam.

## Patentansprüche

1. Ein Abwärmerückgewinnungssystem (70;120) mit:
einer Verbrennungskraftmaschine (11), die eine erste Antriebsmaschine ist und die angeordnet ist, um eine erste Propellerwelle (21) mit Schraubenpropeller (22) zur Drehung anzutreiben,
einer Dampfturbine (12), die eine zweite Antriebsmaschine ist und die angeordnet ist, um durch Dampf, der in einem Boiler (13) erzeugt wird, zur Drehung angetrieben zu werden, um dadurch eine zweite Propellerwelle (36) mit Schraubenpropeller (31), die von der ersten Propellerwelle (21) mit Schraubenpropeller (22) verschieden sind, zur Drehung anzutreiben,
einem ersten Niederdruck-Speisewasserheizer (85), der angeordnet ist, um einen Wärmetausch zwischen Mantelkühlwasser, das einen Wassermantel der Verbrennungskraftmaschine (11) passiert hat, und kondensiertem Wasser, das an der stromabwärtigen Seite der Dampfturbine (12) kondensiert wurde, auszuführen, um dadurch das kondensierte Wasser mit Wärme des Mantelkühlwassers zu erwärmen,
einem Dampfgenerator (103), der angeordnet ist, um dritten Dampf aus zweitem Dampf, der durch von der Verbrennungskraftmaschine (11) ausgetragenem Abgas in einem Abgaseconomizer (94) erzeugt wurde, zu erzeugen, und
einem Hochdruck-Speisewasserheizer (97), der angeordnet ist, um einen Wärmetausch zwischen dem in dem Dampfgenerator (103) erzeugten dritten Dampf und dem in dem ersten Niederdruck-Speisewasserheizer (85) erwärmten kondensierten Wasser auszuführen, um dadurch zumindest einen Teil des dritten Dampfs zu Wasser zu kondensieren.

2. Das Abwärmerückgewinnungssystem (70;120) gemäß Anspruch 1, wobei der Abgaseconomizer (94) der Verbrennungskraftmaschine (11) angeordnet ist, um Wasser zwischen dem Abgaseconomizer (94) und dem Dampfgenerator (103) zu zirkulieren und einen Wärmetausch zwischen Speisewasser, das dem Abgaseconomizer (94) zugeführt wird, und Abgas, das von der Verbrennungskraftmaschine (11) ausgetragen wird, auszuführen, um dadurch Dampf zu erzeugen.

3. Das Abwärmerückgewinnungssystem (120) gemäß Anspruch 1 oder 2, wobei ferner:
der Hochdruck-Speisewasserheizer (97) angeordnet ist, um einen Wärmetausch zwischen dem kondensierten Wasser, das durch von der Verbrennungskraftmaschine (11) ausgetragen und in einem zweiten Speiswasserheizer (114), der in dem Abgaseconomizer (94) vorgesehen ist, erwärmt wurde, und in dem Dampfgenerator (103) erzeugtem Dampf auszuführen, wodurch das kondensierte Wasser mit Wärme des in dem Dampfgenerator (3) erzeugten Dampfs erwärmt wird.

4. Das Abwärmerückgewinnungssystem (120) gemäß einem der Ansprüche 1 bis 3, ferner mit:
einem zweiten Niederdruck-Speisewasserheizer (121), der angeordnet ist, um einen Wärmetausch zwischen dem kondensierten Wasser, das von dem ersten Niederdruck-Speisewasserheizer (85) zu dem Hochdruck-Speisewasserheizer (97) geleitet wird, und dem Dampf oder heißem Wasser, das das kondensierte Wasser in dem Hochdruck-Speisewasserheizer (97) erwärmt hat, an der stromabwärtigen Seite des Hochdruck-Speisewasserheizers (97) auszuführen, wodurch das kondensierte Wasser, das von dem ersten Niederdruck-Speisewasserheizer (85) zu dem Abgaseconomizer (94) geleitet wird, mit Wärme von dem Dampf oder dem heißen Wasser zu erwärmt wird.

5. Ein Schiffantriebssystem mit:
dem Abwärmerückgewinnungssystem (70;120) gemäß einem der Ansprüche 1 bis 4.

6. Ein Schiff mit:
dem Schiffantriebssystem gemäß Anspruch 5.

7. Ein Abwärmerückgewinnungsverfahren in einem Abwärmerückgewinnungssystem, das aufweist
eine Verbrennungskraftmaschine (11), die eine erste Propellerwelle (21) mit Schraubenpropeller (22) zur Drehung antreibt, und
eine Dampfturbine (12), die durch in einem Boiler (13) erzeugten Dampf zur Drehung angetrieben wird, um dadurch eine zweite Propellerwelle (36) mit Schraubenpropeller (31), die von der ersten Propellerwelle (21) mit Schraubenpropeller (22) verschieden sind, zur Drehung anzutreiben,
wobei das Abwärmerückgewinnungsverfahren aufweist:
Bewirken eines Wärmetauschs zwischen Mantelkühlwasser, das einen Wassermantel der Verbrennungskraftmaschine (11) passiert hat, und kondensiertem Wasser, das an der stromabwärtigen Seite der Dampfturbine (12) kondensiert und zu einem Abgaseconomizer (94) geleitet wurde, um dadurch das kondensierte Wasser mit Wärme des Mantelkühlwassers zu erwärmen.

8. Das Abwärmerückgewinnungsverfahren gemäß Anspruch 7, wobei in dem Abgaseconomizer (94) der Verbrennungskraftmaschine (11) Wasser zwischen dem Abgaseconomizer (94) und einem Dampfgenerator (103) zirkuliert und Wärmetausch zwischen Speisewasser, das dem Abgaseconomizer (94) zugeführt wird, und Abgas, das von der Verbrennungskraftmaschine (11) ausgetragen wird, ausgeführt wird, um dadurch Dampf zu erzeugen.

## Revendications

1. Système (70; 120) de récupération de chaleur perdue, comprenant :
un moteur (11) à combustion interne, qui est un premier moteur d'entraînement et qui est monté pour entraîner en rotation un premier arbre (21) de propulseur et un premier propulseur (22) à hélice;
une turbine (12) à vapeur, qui est un deuxième moteur d'entraînement et qui est montée pour être entraînée en rotation par de la vapeur produite dans une chaudière (13) pour ainsi entraîner en rotation un deuxième arbre (36) de propulseur et un deuxième propulseur (31) à hélice, qui sont différents du premier arbre (21) de propulseur et du premier propulseur (22) à hélice;
un premier dispositif (85) de chauffage à basse pression à eau d'alimentation, qui est disposé de manière à provoquer un échange de chaleur à effectuer entre de l'eau de refroidissement de chemise, qui a passé dans une chemise pour de l'eau du moteur (11) à combustion interne, et de l'eau condensée, condensée du côté en aval de la turbine (12) à vapeur, en chauffant ainsi l'eau condensée par de la chaleur de l'eau de refroidissement de la chemise;
un générateur (103) de vapeur, qui est monté pour produire de la troisième vapeur, à partir de la deuxième vapeur produite par des gaz d'échappement du moteur (11) à combustion interne, dans un économiseur (94) de gaz d'échappement et
un dispositif (97) de chauffage à haute pression à eau d'alimentation, qui est monté pour provoquer un échange de chaleur à effectuer entre la troisième vapeur produite dans le générateur (103) de vapeur et la vapeur condensée chauffée dans le premier dispositif (85) de chauffage à basse pression à eau d'alimentation, en condensant ainsi au moins une partie de la troisième vapeur en eau.

2. Système (70; 120) de récupération de chaleur perdue suivant la revendication 1, dans lequel l'économiseur (94) de gaz d'échappement du moteur (11) à combustion interne est monté pour faire circuler de l'eau entre l'économiseur (94) de gaz d'échappement et le générateur (103) de vapeur et pour provoquer un échange de chaleur à effectuer entre de l'eau d'alimentation, qui est envoyée à l'économiseur (94) de gaz d'échappement, et les gaz d'échappement du moteur (11) à combustion interne, en produisant ainsi de la vapeur.

3. Système (120) de récupération de chaleur perdue suivant la revendication 1 ou 2, dans lequel, en outre :
le dispositif (97) de chauffage à haute pression à eau d'alimentation est monté pour provoquer un échange de chaleur à effectuer entre l'eau condensée, chauffée par des gaz d'échappement du moteur (11) à combustion interne dans un deuxième dispositif (114) de chauffage à eau d'alimentation prévu dans l'économiseur (94) de gaz d'échappement, et de la vapeur produite dans le générateur (103) de vapeur, en chauffant ainsi l'eau condensée par de la chaleur de la vapeur produite dans le générateur (103) de vapeur.

4. Système (120) de récupération de chaleur perdue suivant l'une quelconque des revendications 1 à 3, comprenant, en outre :
un deuxième dispositif (121) de chauffage à basse pression à eau d'alimentation, qui est monté pour provoquer un échange de chaleur à effectuer entre l'eau condensée, qui est envoyée du premier dispositif (85) de chauffage à basse pression à eau d'alimentation au dispositif (97) de chauffage à haute pression à eau d'alimentation, et la chaleur ou l'eau chaude, qui a chauffé l'eau condensée dans le dispositif (97) de chauffage à haute pression à eau d'alimentation du côté en aval du dispositif (97) de chauffage à haute pression à eau d'alimentation, en chauffant ainsi l'eau condensée, qui est envoyée du premier dispositif (85) de chauffage à basse pression à eau d'alimentation à l'économiseur (94) de gaz d'échappement par de la chaleur, de la vapeur ou de l'eau chaude.

5. Système de propulsion de navire, comprenant :
le système (70; 120) de récupération de chaleur perdue suivant l'une quelconque des revendications 1 à 4.

6. Navire, comprenant :
le système de propulsion de navire suivant la revendication 5.

7. Procédé de récupération de chaleur perdue dans un système de récupération de chaleur perdue, qui comprend
un moteur (11) à combustion interne, qui entraîne en rotation un premier arbre (21) de propulseur et un premier propulseur (22) à hélice et
une turbine (12) à vapeur, qui est entraînée en rotation par de la vapeur produite dans une chaudière (13), en entraînant ainsi en rotation un deuxième arbre (36) de propulseur et un deuxième propulseur (31) à hélice, qui sont différents du premier arbre (21) de propulseur et du premier propulseur (22) à hélice,
le procédé de récupération de chaleur perdue comprenant :
provoquer un échange de chaleur à effectuer entre de l'eau de refroidissement d'une chemise, qui a passé dans une chemise pour de l'eau du moteur (11) à combustion interne, et de l'eau condensée, qui est condensée du côté en aval de la turbine (12) à vapeur et envoyée à un économiseur (94) de gaz d'échappement, en chauffant ainsi l'eau condensée par de la chaleur de l'eau de refroidissement de la chemise.

8. Procédé de récupération de chaleur perdue suivant la revendication 7,
dans lequel, dans l'économiseur (94) de gaz d'échappement du moteur (11) à combustion interne, on fait circuler de l'eau entre l'économiseur (94) de gaz d'échappement et le générateur (103) de vapeur et on provoque un échange de chaleur à effectuer entre de l'eau d'alimentation, qui est envoyée à l'économiseur (94) de gaz à échappement, et les gaz d'échappement du moteur (11) à combustion interne, en produisant ainsi de la vapeur.
